# EUROPEAN PATENT APPLICATION

(11) **EP 4 793 531 A1**
(43) Date of publication of application: **19.08.2026**
(21) Application number: 25158577.4
(22) Date of filing: 18.02.2025
(51) Int. Cl.: F16L 5/04, A62C 2/06, F16L 5/10, H02G 3/04, H02G 3/22

(54) **DEVICE AND METHOD FOR PRODUCING A FLUE GAS-TIGHT PIPE PENETRATION**

(71) Applicant: Hilti Aktiengesellschaft, 9494 Schaan (LI)
(72) Inventor: Prem, Ramona, 86856 Hiltenfingen (DE); Bamberger, Julia, 82166 Gräfelfing (DE); Schwabbauer, Laura, 80639 München (DE); Reineck, Marie, 86916 Kaufering (DE); Markus, Daniel, 86169 Augsburg (DE)
(74) Representative: Hilti Aktiengesellschaft Corporate Intellectual Property

(57) **Abstract**

The invention relates to a device (1) for producing a flue gas-tight pipe penetration in a building wall or ceiling (2, 3), comprising
- a tubular base body (4) with a first end section and a second end section,
- a first collar element (5) arranged on the first end section having a sleeve-shaped section (5.1) firmly connected to the base body (4) and a plurality of collar segments (5.2) arranged at an angle, in particular at right angles, to the sleeve-shaped section (5.1), which are foldable in and out,
- a second collar element (6) having a sleeve-section (6.1) for connecting to the second end section of the base body (4) and a plurality of collar segments (6.2) arranged at an angle, in particular at right angles, to the sleeve-shaped section (6.1).

The invention also relates to a method for producing a flue gas-tight pipe penetration using a device (1) according to the invention.

## Description

The invention relates to a device and a method for producing a flue gas-tight pipe penetration in a building wall or ceiling.

### State of the art

In structural fire protection, prefabricated fire protection devices for creating a pipe penetration in a building wall or ceiling are becoming increasingly important. In the event of a fire, they are intended to ensure that the wall or ceiling opening through which the pipe is routed is sealed quickly and flue gas-tight. Known fire protection devices have an intumescent material for this purpose, which swells under the effect of heat and thus closes the wall or ceiling opening in the event of a fire. The intumescent material is usually arranged in the form of a fire protection sleeve around the pipe, which is generally not fireproof.

In the case of a pipe penetration in a building wall or ceiling, fire protection must be ensured from both sides of the building wall or ceiling. As a rule, the fire protection devices are therefore arranged on both sides of the respective wall or ceiling opening. However, the wall or ceiling openings are often only accessible from one side, which makes installation more difficult and the use of prefabricated fire protection devices often impossible.

Prefabricated fire protection devices usually also have the disadvantage that they cannot be adapted to different wall or ceiling thicknesses, meaning that a separate fire protection device must be provided for each wall or ceiling thickness. This is uneconomical.

The present invention is concerned with the task of eliminating the above-mentioned disadvantages of a device for producing a flue gas-tight pipe penetration in a building wall or ceiling. In particular, a device is to be provided which can be mounted from one side of the building wall or ceiling, but which ensures fire protection on both sides. In addition, the device should be adaptable to different wall or ceiling thicknesses.

To solve the problem, the device with the features of claim 1 and the method with the features of claim 7 are proposed. Advantageous further embodiments of the invention can be found in the respective dependent claims.

### Disclosure of the invention

The device proposed for creating a flue gas-tight pipe penetration in a building wall or ceiling comprises:
- a tubular base body with a first end section and a second end section,
- a first collar element arranged on the first end section having a sleeve-shaped section firmly connected to the base body and a plurality of collar segments arranged at an angle, in particular at right angles, to the sleeve-shaped section, which are foldable in and out,
- a second collar element having a sleeve-shaped section for connecting to the second end section of the base body and a plurality of collar segments arranged at an angle, in particular at right angles, to the sleeve-shaped section.

When installing the device, the base body and the first collar element firmly connected to the base body are installed first. The base body is inserted with the first collar element first into a wall or ceiling opening until the collar segments of the first collar element, which are folded in during insertion, come to rest on the other side of the building wall or ceiling outside the wall or ceiling opening and fold out or can be folded out. By pulling back the base body, the unfolded collar segments are then brought into contact with the building wall or ceiling on the side opposite the installation side. The second collar element is then pushed onto the base body until its collar segments are in contact with the building wall or ceiling, on the installation side. In this way, flue gas-tight pipe penetrations are created on both sides of the wall or ceiling opening, even though installation is only carried out from one side. In addition, the device can be adapted to the respective wall or ceiling thickness when the second collar element is slid onto the base body. It is also possible to carry out installation from both sides.

According to a preferred embodiment of the invention, the tubular base body is made of metal and/or plastic. The base body is therefore inexpensive to manufacture and also sufficiently dimensionally stable.

Alternatively or additionally, it is proposed that the base body has an intumescent material on the inner circumference. In the event of fire, the intumescent material seals a gap remaining between the base body and a pipe accommodated in the base body. Preferably, the intumescent material forms at least one circumferential band so that it is ensured that the gap is sealed all the way around in the event of a fire. For example, a strip of intumescent material can be arranged on the inner circumference of both end sections of the base body.

Furthermore, the sleeve-shaped sections and/or the collar segments of the collar elements are preferably made of an intumescent material, at least in some areas. In the event of fire, the intumescent material swells and thus seals the area between the device and the building wall or ceiling.

In a further development of the invention, it is proposed that the collar segments of the first collar element, which are foldable in and out, are made of a resilient material, at least in some areas. This enables the collar segments to be folded in and at the same time tensioned when the base body and the first collar element are inserted into the wall or ceiling opening. Due to the tensioning, the collar segments fold out again automatically when they are guided out of the wall or ceiling opening on the other side of the building wall or ceiling.

Alternatively or additionally, it is proposed that the collar segments of the first collar element, which are foldable in and out, are tensioned or can be tensioned by means of springs. The springs can be used to actively tension the collar elements so that the device can also be removed again from the assembly side if required. To do this, first remove the pushed-on second collar element from the base body. The base body is then inserted a little deeper into the wall or ceiling opening so that the collar segments of the first collar element can be actively tensioned and folded in. In this state, the base body including the first collar element can be pulled out of the wall or ceiling opening from the installation side.

Advantageously, the collar segments of the first collar element and/or the second collar element are each angled to form the sleeve-shaped section. The collar elements can therefore be manufactured particularly simply and cost-effectively. Several angled collar segments are arranged and connected to each other in such a way that first legs of the angled collar segments form the sleeve-shaped section and second legs arranged at an angle to this extend outwards from the sleeve-shaped section in a radial direction. In the angled collar segments of the first collar element, the second legs are movably hinged to the first legs to enable folding and unfolding. The angle between the two legs is therefore not fixed, but variable. In the case of the angled collar segments of the second collar element, the angle is preferably fixed. Furthermore, the angle is preferably 90°. The second leg can therefore be laid flat against the building wall or ceiling.

In addition, a method for producing a flue gas-tight pipe penetration in a building wall or ceiling using a device according to the invention is disclosed. The method comprises the steps of:
a) inserting the base body of the device with the first end section and the first collar element arranged thereon leading into a wall or ceiling opening, whereby the collar segments of the first collar element are folded in and tensioned,
b) guiding the collar segments of the first collar element out of the wall or ceiling opening, whereby the folded-in and tensioned collar segments unfold or are folded out,
c) retracting the base body until the unfolded collar segments of the first collar element lie against the building wall or ceiling, preferably flat, and
d) sliding the second collar element onto the base body until the collar segments of the second collar element lie against the building wall or ceiling, preferably flat.

The advantages of the method can be seen in particular in the fact that the device is installed from one side of the building wall or ceiling, with the two collar elements of the device each coming into contact with the building wall or ceiling, but on different sides of the building wall or ceiling. In this way, a flue gas-tight seal can be achieved on both sides. In addition, the length of the device can be adapted to the respective wall or ceiling thickness by sliding the second collar element onto the base body.

As a further forming measure, it is proposed that after step d) the second collar element is fastened to the building wall or ceiling with the aid of fastening means and/or an adhesive. The fastening secures the position of the device in relation to the building wall or ceiling, so that the manufactured pipe penetration is permanently sealed so that it is impermeable to flue gas.

A preferred embodiment of the invention is described in more detail below with reference to the accompanying drawings. These show:
- Fig. 1: a side view of a device according to the invention during insertion into a wall opening, the wall opening or wall being shown in section,
- Fig. 2: a second side view of the device of Figure 1 when inserted into the wall opening,
- Fig. 3: a third side view of the device in Figure 1 being inserted into the wall opening,
- Fig. 4: a fourth side view of the device of Figure 1 when inserted into the wall opening,
- Fig. 5: a fifth side view of the device of Figure 1 when inserted into the wall opening,
- Fig. 6: a sixth side view of the device of Figure 1 after insertion into the wall opening,
- Fig. 7: a perspective view of the device of Figure 1 after insertion into the wall opening, viewed from one side of the wall, and
- Fig. 8: a further perspective view of the device of Figure 1 after insertion into the wall opening, viewed from the other side of the wall.

### Detailed description of the drawings

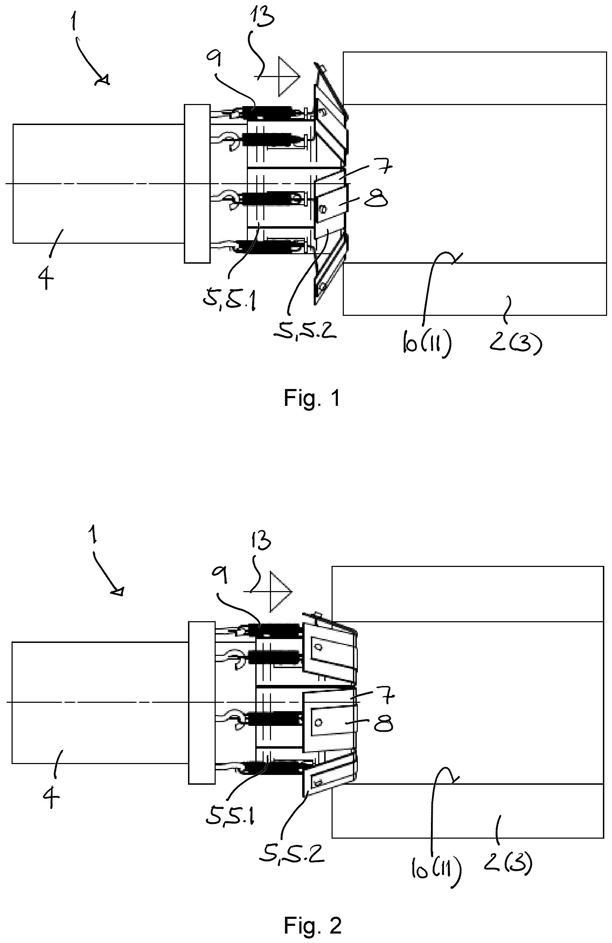

Figures 1 to 8 show a device 1 according to the invention, comprising a tubular base body 4, a first collar element 5 connected to the base body 4 and a second collar element 6 which can be connected to the base body 4. Figures 1 to 6 show the device being inserted into a wall opening 10 of a building wall 2 to produce a flue gas-tight pipe penetration, whereby the device 1 can be inserted analogously into a ceiling opening 11 of a building ceiling 3 (see reference signs in brackets). First, the base body 4 is mounted with the first collar element 5 arranged on it. The assembly is carried out in the assembly direction 13 indicated by an arrow.

The collar element 5 connected to the base body 4 has a sleeve-shaped section 5.1 and collar segments 5.2, which are arranged at equal angular distances from each other around the sleeve-shaped section 5.1. The collar segments 5.2 are made of an intumescent first material 7 and a resilient second material 8. The intumescent material 7 swells when exposed to heat and thus closes the wall opening 10 in the event of a fire. The resilient material allows the collar elements 5.2 to be folded in and out. The sleeve-shaped section 5.1 is preferably also made of an intumescent material 7, at least in certain areas, in order to ensure that the wall opening 10 is securely closed in the event of a fire.

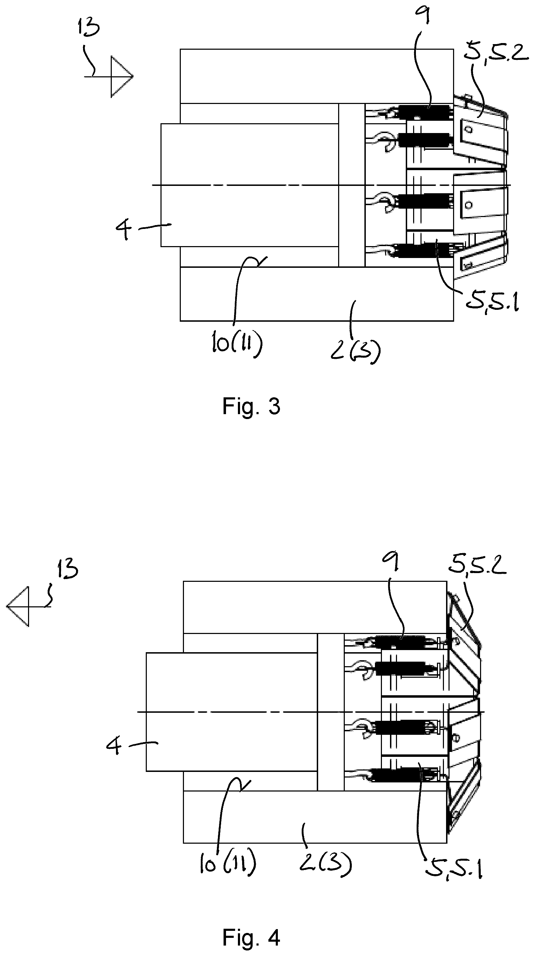

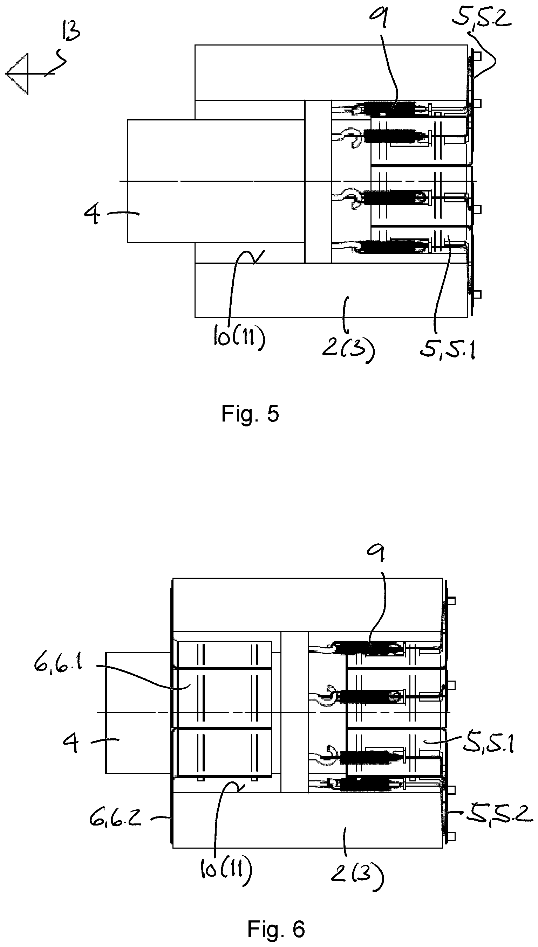

The collar segments 5.2 are folded in when the device 1 is inserted into the wall opening 10, as this is smaller than the collar element 5 when the collar segments 5.2 are folded out. During insertion, the collar segments 5.2 are therefore pressed in the direction of the sleeve-shaped section 5.1 and at the same time tensioned (see Figure 2). The device 1 is inserted so deeply into the wall opening 10 that the tensioned collar segments 5.2 emerge from the wall opening 10 on the other side of the building wall 2 (see Figure 3). The tension of the collar segments 5.2 causes them to fold out again automatically. In the present case, springs 9 are provided to ensure that the collar segments 5.2 fold out safely. If the device 1 is pulled back so that the mounting direction 13 is now reversed (see Figure 4), the collar segments 5.2 lie flat against the building wall 2 (see Figure 5). The second collar element 6 can now be fitted. This also has a sleeve-shaped section 6.1 and collar segments 6.2. However, these are not foldable in and out but extend in a radial direction away from the sleeve-shaped section 6.1. With the sleeve-shaped section 6.1 leading, the second collar element 6 is placed on the base body 4 and pushed on until the collar segments 6.2 come into contact with the building wall 2. The second collar element 6 is therefore mounted in mirror image to the first collar element 5. Second collar element 6 also contains intumescent material. Therefore, fire protection is provided from both sides.

The springs 9 also help with dismounting the device 1 from one side. First, collar 6 is dismounted, then the base body 4 attached to the spring 9 together with collar 5.2 is pushed towards the other side. Then, the collar segment 6.2 is folded in so that it can be pulled towards side 13.

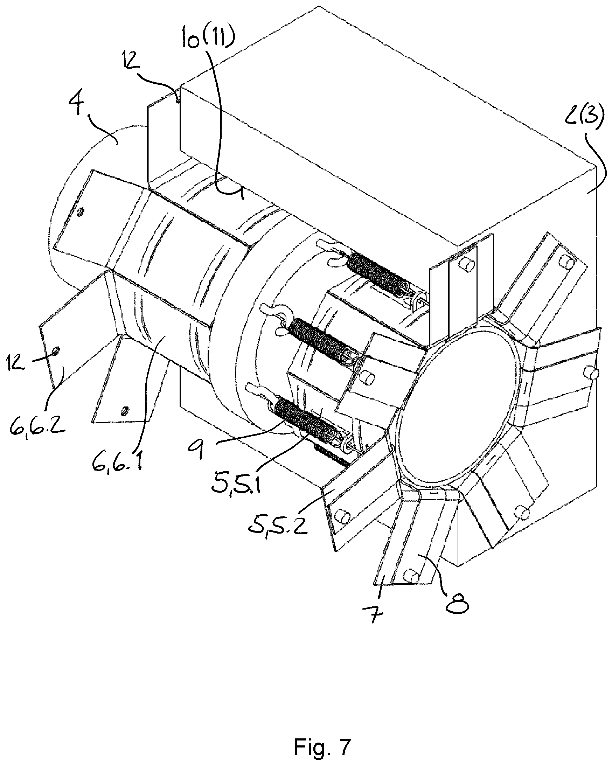

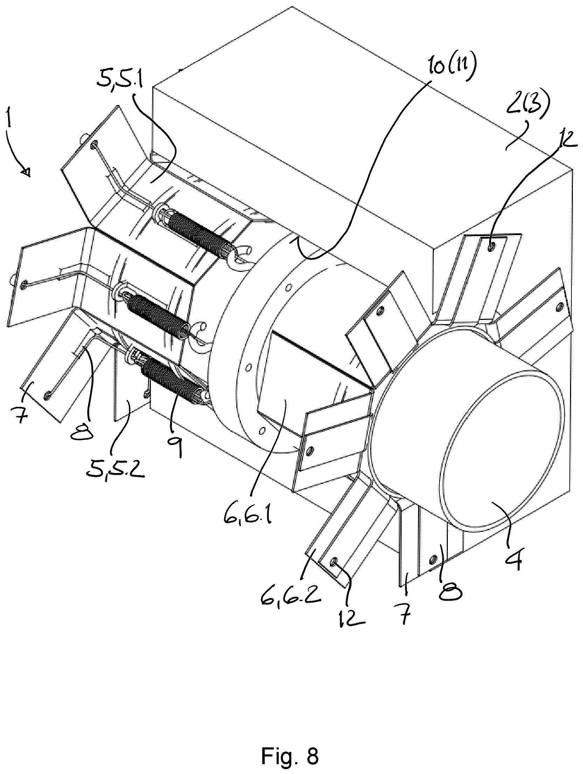

Figures 7 and 8 show the fully assembled device from two different viewing directions. From each viewing direction, a collar element 5, 6 forms the flue gas-tight closure of the wall opening 10. However, the device 1 is mounted from one and the same side of the building wall 2. To fix the device 1 in the building wall 2, the second collar element 6 can be fastened to the building wall 2 using fastening means, such as screws (not shown). Openings 12 are provided in the collar segments 6.2 of the second collar element 6 to accommodate the fastening means.

Deviating from the illustration in Figures 1 to 8, the collar segments 5.2, 6.2 of the collar elements 5, 6 can have different shapes. Preferably, they are rectangular in shape and arranged at the same angular distance from one another around the respective sleeve-shaped section 5.1, 6.1. The number of collar segments 5.2, 6.2 can also vary depending on the size of the wall or ceiling opening 10, 11. Since the second collar element 6 is slidably mounted on the base body 4, the length of the device 1 can be adapted to the respective wall or ceiling thickness.

Due to the intumescent material 7 of the collar elements 5, 6, even irregular wall or ceiling openings 10, 11 can be sealed flue gas-tight with the aid of the device 1.

### List of reference symbols

- 1: Device
- 2: Building wall
- 3: Building ceiling
- 4: Base body
- 5: Collar element

- 5.1: Sleeve-shaped section
- 5.2: Collar segment

- 6: Collar element

- 6.1: Sleeve-shaped section
- 6.2: Collar segment

- 7: Intumescent material
- 8: Resilient material
- 9: Spring
- 10: Wall opening
- 11: Ceiling opening
- 12: Opening
- 13: Mounting direction

## Claims

1. Device (1) for producing a flue gas-tight pipe penetration in a building wall or ceiling (2, 3), comprising
- a tubular base body (4) with a first end section and a second end section,
- a first collar element (5) arranged on the first end section having a sleeve-shaped section (5.1) firmly connected to the base body (4) and a plurality of collar segments (5.2) arranged at an angle, in particular at right angles, to the sleeve-shaped section (5.1), which are foldable in and out,
- a second collar element (6) having a sleeve-section (6.1) for connecting to the second end section of the base body (4) and a plurality of collar segments (6.2) arranged at an angle, in particular at right angles, to the sleeve-shaped section (6.1).

2. Device (1) according to claim 1,
**characterized in that** the tubular base body (4)
- is made of metal and/or plastic and/or
- has an intumescent material (7) on the inner circumference, which preferably forms at least one circumferential band.

3. Device (1) according to claim 1 or 2,
**characterized in that** the sleeve-shaped sections (5.1, 6.1) and/or the collar segments (5.2, 6.2) of the collar elements (5, 6) are made at least in some areas from an intumescent material (7).

4. Device (1) according to any of the preceding claims,
**characterized in that** the collar segments (5.2) of the first collar element (5), which are foldable in and out, are made of a resilient material (8), at least in some areas.

5. Device (1) according to any of the preceding claims,
**characterized in that** the collar segments (5.2) of the first collar element (5), which are foldable in and out, are tensioned or can be tensioned by means of springs (9).

6. Device (1) according to any of the preceding claims,
**characterized in that** the collar segments (5.2, 6.2) of the first collar element (5) and/or of the second collar element (6) are each angled to form the sleeve-shaped section (5.1, 6.1).

7. A method of making a flue gas-tight pipe penetration in a building wall or ceiling (2, 3) using a device according to any one of the preceding claims, comprising the steps of:
a) inserting the base body (4) of the device (1) with the first end section and the first collar element (5) arranged thereon leading into a wall or ceiling opening (10, 11), whereby the collar segments (5.2) of the first collar element (5) are folded in and tensioned,
b) guiding the collar segments (5.2) of the first collar element (5) out of the wall or ceiling opening (10, 11), whereby the folded-in and tensioned collar segments (5.2) unfold or are folded out,
c) retracting the base body (4) until the unfolded collar segments (5.2) of the first collar element (5) lie against the building wall or ceiling (2, 3), preferably flat, and
d) sliding the second collar element (6) onto the base body (4) until the collar segments (6.2) of the second collar element (6) lie against the building wall or ceiling, preferably flat.

8. Method according to claim 7,
**characterized in that**, after step d), the second collar element (6) is fastened to the building wall or ceiling (2, 3) with the aid of fastening means and/or an adhesive.
